# EUROPEAN PATENT APPLICATION

(11) **EP 4 439 797 A2**
(43) Date of publication of application: **02.10.2024**
(21) Application number: 24166020.8
(22) Date of filing: 25.03.2024
(51) Int. Cl.: H01M 10/613, H01M 10/625, H01M 10/647, H01M 10/6551, H01M 10/6554, H01M 10/6556, H01M 10/6561, H01M 50/209, H01M 50/258, H01M 50/262, H01M 50/271, H01M 50/342, H01M 50/367, H01M 50/507

(54) **BATTERY MODULE ASSEMBLY**

(30) Priority: 26.03.2023 KR 20230039396; 03.08.2023 KR 20230101740
(71) Applicant: Samsung SDI Co., Ltd., Yongin-si, Gyeonggi-do 17084 (KR)
(72) Inventor: WOO, Beomjun, 17084 Yongin-si (KR); JEON, Jeehoon, 17084 Yongin-si (KR); MOON, Soodeok, 17084 Yongin-si (KR); JI, Taeho, 17084 Yongin-si (KR)
(74) Representative: Marks & Clerk LLP

(57) **Abstract**

A battery module assembly includes: a frame; a plurality of battery modules accommodated in a lower portion of the frame, each of which includes a battery cell; and a protective cover extending across and protecting lower portions of the battery modules. The frame includes a plurality of support fixing portions extending in a length direction in which each of the battery modules extends and supports both sides of the battery modules. The battery modules further include fastening flanges protruding in directions from end portions adjacent to the support fixing portions and overlapping the support fixing portions in a vertical direction, and the battery modules are fixed to the lower portion of the frame by using fixing members that extend through the fastening flanges from lower sides of the fastening flanges and are accommodated in the support fixing portions.

## Description

### BACKGROUND

### 1. Field

Aspects of embodiments of the present disclosure relate to a battery module assembly.

### 2. Description of the Related Art

Secondary batteries are designed to be rechargeable and dischargeable multiple times, and thus, they may be repeatedly used. Secondary batteries are used as energy sources for devices, such as mobile devices, electric vehicles, hybrid electric vehicles, electric bicycles, and uninterruptible power supplies. Single-cell secondary batteries or multi-cell secondary batteries, which include a plurality of cells connected to each other in one unit, are used according to the type of external device using the secondary batteries.

### SUMMARY

Embodiments of the present disclosure include a battery module assembly including battery modules configured to be easily fixed to support fixing portions of a frame by using fastening flanges.

Additional aspects and features of the present disclosure will be set forth, in part, in the description which follows and, in part, will be apparent from the description or may be learned by practice of the described embodiments of the present disclosure.

According to an embodiment of the present disclosure, a battery module assembly includes: a frame; a plurality of battery modules accommodated in a lower portion of the frame, each of the plurality of battery modules including a battery cell; and a protective cover extending across and protecting lower portions of the plurality of battery modules. The frame includes a plurality of support fixing portions extending in a length direction in which each of the plurality of battery modules extends and being configured to support both sides of each of the plurality of battery modules. The plurality of battery modules further includes fastening flanges protruding in directions from end portions, e.g. from sides of the end portions, i.e. the sides of the battery modules, adjacent to the plurality of support fixing portions and overlapping the plurality of support fixing portions in a vertical direction, and the plurality of battery modules are fixed to the lower portion of the frame by using fixing members that extend through the fastening flanges from lower sides of the fastening flanges and are accommodated in the plurality of support fixing portions.

The plurality of battery modules may be arranged in a second direction crossing a first direction in which front and rear sides of the frame face, or are connected to, each other.

The length direction in which each of the plurality of battery modules extends may be the first direction.

The fastening flanges may be provided on both sides of each of the plurality of battery modules in the second direction such that a plurality of fastening flanges are arranged at intervals in the first direction along each of both sides of the plurality of battery modules.

The fastening flanges may be asymmetrically provided on both sides of each of the plurality of battery modules such that the fastening flanges do not overlap each other at battery modules adjacent to each other in the second direction.

The fastening flanges may protrude at positions that are closer to lower ends of each of the plurality of battery modules than to upper ends of each of the plurality of battery modules.

The battery module assembly may further include a busbar fixed to the frame, and the plurality of battery modules adjacent to each other in the second direction may be electrically connected to each other through the busbar.

The busbar may extend in the second direction, and the plurality of battery modules adjacent to each other in the second direction may be electrically connected to each other through the busbar.

Each of the plurality of battery modules may further include an upper housing extending in the first direction and disposed towards, or near, the frame and a lower housing extending in the first direction and opposite the upper housing. The upper housing may have first sides extending, from both end portions of the upper housing in the second direction, toward the lower housing in the vertical direction, and the lower housing may have second sides extending, from both end portions of the lower housing in the second direction, toward the upper housing in a direction opposite the vertical direction.

The first sides may be longer than the second sides in the vertical direction.

Each of the plurality of battery modules may further include terminal housings that connect the upper housing and the lower housing to each other at both end portions of the respective battery module in the first direction, and at least one of the upper housing, the lower housing, and the terminal housings may include a weld line formed on an edge that is in contact with another of the upper housing, the lower housing, and the terminal housings.

The battery cell may include a first vent in a lower portion thereof and configured to discharge gas, and each of the plurality of battery modules may further include a gas flow path in an inner lower side thereof to guide the gas.

Each of the plurality of battery modules may further include a second vent in the terminal housings and connected to the gas flow path to discharge the gas to an outside area.

Each of the plurality of battery modules may further include a heat transfer sheet between the battery cell and the upper housing and extending in the first direction.

The upper housing may have a cooling path therein, and the cooling path may extend in the first direction and may be configured to cool the respective battery module.
At least some of the above and other features of the invention are set out in the claims.

### BRIEF DESCRIPTION OF THE DRAWINGS

The above and other aspects and features of the present disclosure will be more apparent from the following description taken in conjunction with the accompanying drawings, in which:
FIG. 1 is a top perspective view of a battery module assembly according to an embodiment;
FIG. 2 is a bottom perspective view of the battery module assembly shown in FIG. 1;
FIG. 3 is a bottom view of the battery module assembly shown in FIGS. 1 and 2 in a state in which a protective cover is removed from the battery module assembly;
FIG. 4 is an exploded cross-section perspective view of the battery module assembly taken along the line A-A' of FIG. 3;
FIG. 5 is a cross-sectional view of the battery module assembly shown in FIGS. 1-4;
FIG. 6 is a top view of a frame according to an embodiment;
FIG. 7 is an exploded perspective view of the battery module assembly shown in FIGS. 1-5;
FIG. 8 is a plan view of battery modules arranged side-by-side according to an embodiment;
FIG. 9 is a perspective view of a battery module according to an embodiment;
FIG. 10 is a front view of the battery module shown in FIG. 9;
FIG. 11 is a side view illustrating the battery module according to an embodiment;
FIG. 12 is an exploded perspective view of the battery module shown in FIGS. 9-11; and
FIG. 13 is an exploded perspective view of the battery module shown in FIGS. 9-12 in a state in which a housing is removed from the battery module.

### DETAILED DESCRIPTION

Reference will now be made, in detail, to embodiments, examples of which are illustrated in the accompanying drawings. In this regard, the described embodiments may have different forms and should not be construed as being limited to the descriptions set forth herein. Accordingly, embodiments are merely described below, by referring to the figures, to explain aspects and features of the present description.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Hereinafter, a battery module assembly will be described according to embodiments with reference to the accompanying drawings.

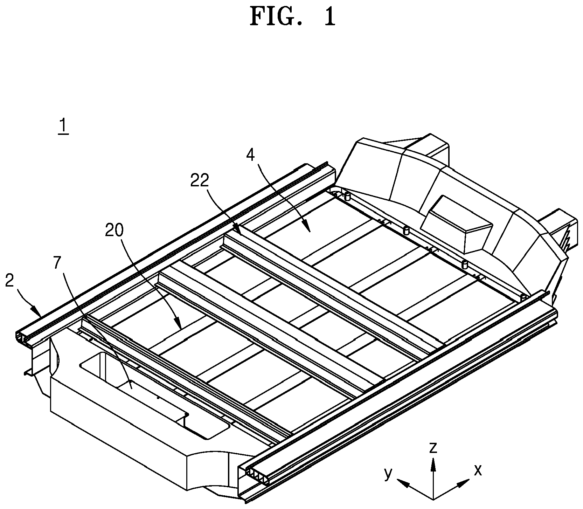

FIG. 1 is a top perspective view of a battery module assembly 1 according to an embodiment.

Referring to FIG. 1, according to an embodiment, the battery module assembly 1 may include a frame 2, a battery module 4, and a central regulation unit 7.

According to an embodiment, the frame 2 may accommodate and protect the battery module 4. The frame 2 may also accommodate and protect the central regulation unit 7. The frame 2 may have a front direction (or front side) and a rear direction (or rear side). A direction in which front and rear sides of the frame 2 are connected to each other (or oppose each other) may be defined as an x-axis direction. The direction in which the front and rear sides of the frame 2 are connected to each other may be defined as a first direction. A side of the frame 2 in which the central regulation unit 7 is accommodated may be referred to as the front side of the frame 2. The frame 2 may have an upward direction (or an upper side) and a downward direction (or a lower side). A direction in which upper and lower sides of the frame 2 are connected to each other (or oppose each other) may be defined as a z-axis direction. The battery module 4 may be assembled to the frame 2 by moving the battery module 4 from the lower side to the upper side of the frame 2. However, the directions of the frame 2 are not limited to the description above.

The frame 2 may form the exterior of (e.g., the outer appearance and structure of) the battery module assembly 1. The frame 2 may support the battery module assembly 1. The frame 2 may be a vehicle body frame forming a framework of a vehicle (e.g., a car). The frame 2 may be a chassis of an automobile. However, the use and application of the frame 2 are not limited thereto.

According to an embodiment, the battery module 4 may store electrical energy. The battery module 4 may be accommodated in a lower portion of the frame 2. The battery module 4 may be positioned in the lower portion of the frame 2 and fixed to the lower portion of the frame 2. The battery module 4 may be detachably attached to the frame 2. The battery module 4 may be coupled to the frame 2 in a direction from the lower side to (or toward) the upper side of the frame 2. The battery module 4 may be detached from the frame 2 in the downward direction of the frame 2. The battery module assembly 1 may include a plurality of battery modules 4. However, methods of attaching the battery modules 4 to the frame 2 or detaching the battery modules 4 from the frame 2 are not limited to the description above.

The battery modules 4 may extend in a length direction. The battery modules 4 may extend in the first direction. The battery modules 4 may extend in the first direction and may, thus, have a length in the first direction. The first direction may be a direction in which the front and rear sides of the frame 2 are connected to each other. The first direction may be the x-axis direction. However, the shape or shapes of the battery modules 4 is/are not limited to the description above.

The battery modules 4 may be arranged side-by-side. The battery modules 4 may be arranged in a second direction. The second direction may cross the first direction. The second direction may have an angle from (e.g., may be non-parallel with) the first direction. The angle between the second direction and the first direction may be approximately a right angle. The second direction may be a y-axis direction. However, methods of arranging the battery modules 4 and the direction of the second direction are not limited to the description above.

According to an embodiment, the frame 2 may include a rib 22. The rib 22 may support the frame 2 from the inside of the frame 2. The rib 22 may extend in the second direction. The frame 2 may include a plurality of ribs 22. The ribs 22 may be provided on upper sides of (e.g., may be above) the battery modules 4. The number of ribs 22 may be two or more. However, the shapes of the ribs 22 and the number of ribs 22 are not limited thereto.

According to an embodiment, the frame 2 may include a support fixing portion 20. The support fixing portion 20 may support and fix the battery modules 4. The support fixing portion 20 may extend in the length direction in which each of the battery modules 4 extends. The support fixing portion 20 may extend in the first direction. A middle portion of the support fixing portion 20 may be supported by the ribs 22. The support fixing portion 20 may support both sides of each of the battery modules 4. The support fixing portion 20 may support both sides of each of the battery modules 4 in the second direction. The support fixing portion 20 may extend in the length direction in which each of the battery modules 4 extends. The frame 2 may include a plurality of support fixing portions 20. The support fixing portions 20 may be arranged in (e.g., may be adjacent to each other in) the second direction. The support fixing portions 20 may be provided between the battery modules 4 that are arranged in the second direction. The battery modules 4 may be arranged between the support fixing portions 20 arranged in the second direction. However, the arrangement of the support fixing portions 20 and the battery modules 4 is not limited thereto.

According to an embodiment, the central regulation unit 7 may control the battery modules 4. The central regulation unit 7 may control (e.g., may be configured to control) the battery modules 4 to distribute power supplied from the battery modules 4. The central regulation unit 7 may control the battery modules 4 to distribute power to the battery modules 4. The central regulation unit 7 may be electrically connected to the battery modules 4. The central regulation unit 7 may receive power from the battery modules 4. The central regulation unit 7 may wirelessly control the battery modules 4. The central regulation unit 7 may communicate with the battery modules 4. The central regulation unit 7 and the battery modules 4 may communicate with each other by a daisy chain method. The central regulation unit 7 may obtain information about the states of charge (SOCs) of the battery modules 4. During an operation of charging or discharging the battery modules 4, the central regulation unit 7 may use information about the SOC of each of the battery modules 4 to select battery modules 4 to be charged or discharged. The central regulation unit 7 may be a battery management system (BMS). However, the battery module control method or communication method of the central regulation unit 7 is not limited thereto.

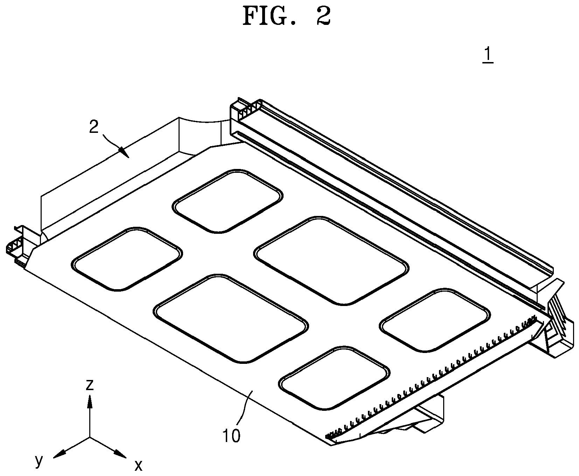

FIG. 2 is a bottom perspective view of the battery module assembly 1 according to an embodiment.

Referring to FIG. 1 and 2, according to an embodiment, the battery module assembly 1 may include a protective cover 10. According to an embodiment, the protective cover 10 may protect lower portions of the battery modules 4. The protective cover 10 may protect the lower portion of the frame 2. The protective cover 10 may be fixed to the lower portion of the frame 2. The protective cover 10 may be disposed across (e.g., may cover) the lower portions of the battery modules 4. However, the function and role of the protective cover 10 are not limited to the description above.

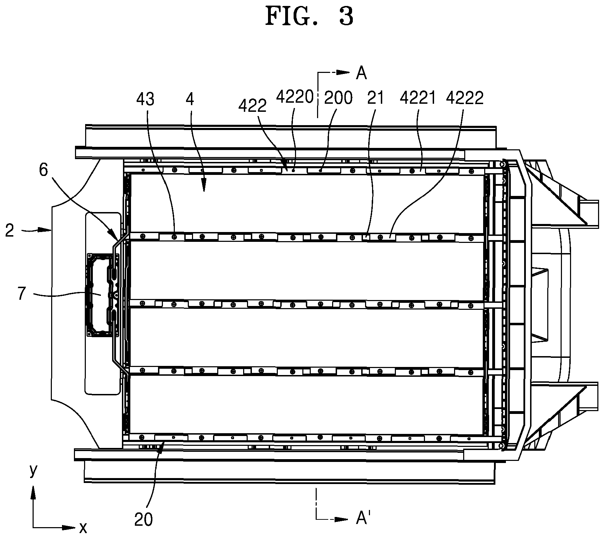

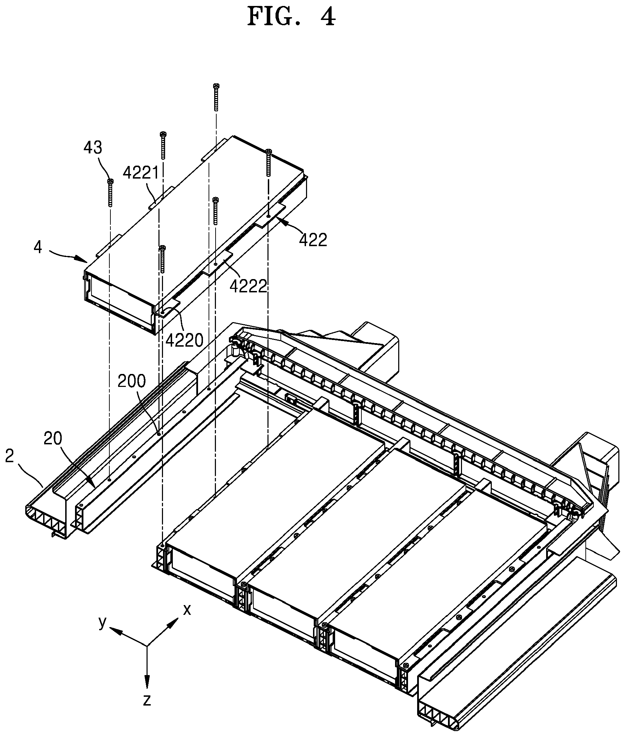

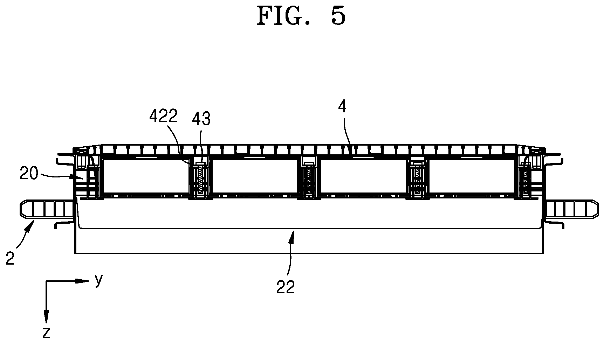

FIG. 3 is a bottom view of the battery module assembly 1 according to an embodiment in a state in which the protective cover 10 is removed from the battery module assembly 1. FIG. 4 is an exploded cross-section perspective view of the battery module assembly 1 taken along the line A-A' of FIG. 3. FIG. 5 is a cross-sectional view of the battery module assembly 1 according to an embodiment.

Referring to FIGS. 3 to 5, according to an embodiment, the battery modules 4 may include fastening flanges 422. The fastening flanges 422 may fix the battery modules 4 to the lower portion of the frame 2. The fastening flanges 422 may protrude from end portions of the battery modules 4 - particularly the sides of the end portions of the battery modules, i.e. from the sides of the battery modules, and along the sides of the battery modules. The fastening flanges 422 may protrude toward the support fixing portions 20 from end portions of the battery modules 4 adjacent to the support fixing portions 20. The fastening flanges 422 may protrude from the end portions of the battery modules 4 to overlap the support fixing portions 20 in a vertical direction. The fastening flanges 422 may protrude from lateral surfaces of the battery modules 4 in the second direction.

According to an embodiment, each of the battery modules 4 may include a plurality of fastening flanges 422. The fastening flanges 422 may be arranged in (e.g., may be adjacent in) the first direction. The fastening flanges 422 may be arranged at intervals (e.g., regular or predetermined intervals) in the first direction (e.g. along the sides of the battery modules from and between the end portions of the battery modules). The fastening flanges 422 may be independently (or separately) arranged on both sides of each of the battery modules 4. The fastening flanges 422 may be arranged on both sides of each of the battery modules 4 in the second direction. Both sides of each of the battery modules 4 may face the support fixing portions 20. The fastening flanges 422 may be formed at intervals (e.g., regular or predetermined intervals) in the first direction on both sides of each of the battery modules 4. However, the function and arrangement of the fastening flanges 422 are not limited thereto.

According to an embodiment, the battery module assembly 1 may include fixing members (e.g., screws, bolts, rivets, etc.) 43 for fixing the battery modules 4 to the frame 2. The fixing members 43 may fix the battery modules 4 to the frame 2. The fixing members 43 may fix the battery modules 4 to the support fixing portions 20. The fixing members 43 may be inserted into insertion holes (e.g., insertion openings) 4220 in the fastening flanges 422. The fixing members 43 may be fixed to the fastening flanges 422. The fixing members 43 may be fastened in a direction from the lower side to the upper side of the frame 2. However, methods of fixing the battery modules 4 to the frame 2 are not limited to thereto.

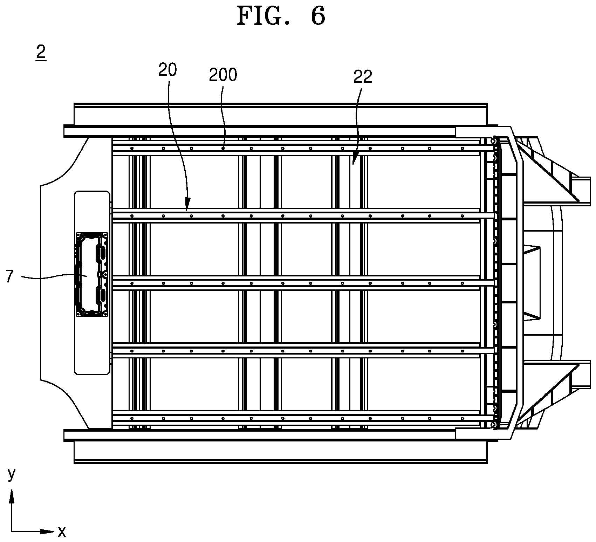

FIG. 6 is a plan view of the frame 2 according to an embodiment.

Referring to FIGS. 3, 4, and 6, according to an embodiment, the support fixing portions 20 of the frame 2 may have fastening holes (e.g., fastening openings) 200. The fastening holes 200 may accommodate and secure the fixing members 43. The fixing members 43 may be inserted into and fixed to the fastening holes 200. The fixing members 43 may be inserted into the fastening holes 200 in the support fixing portions 20 in a direction from the lower side to the upper side of the frame 2. The fastening holes 200 may be concentric with (e.g., aligned with) the insertion holes 4220 in the fastening flanges 422. The fixing members 43 may be inserted into the insertion holes 4220 in the fastening flanges 422 and fixed to the fastening holes 200 in the support fixing portions 20. The fixing members 43 may penetrate (e.g., may extend through) the fastening flanges 422 from lower sides of the fastening flanges 422 and may be accommodated in the support fixing portions 20. Non-limiting examples of the fixing members 43 may include screws, bolts, and rivets.

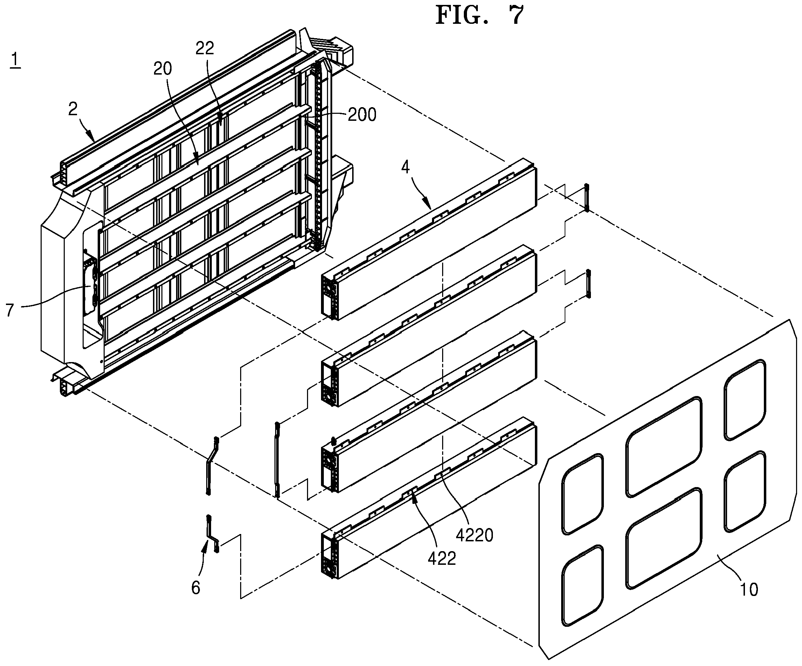

FIG. 7 is an exploded perspective view of the battery module assembly 1 according to an embodiment.

Referring to FIG. 7, according to an embodiment, the battery module assembly 1 may include a busbar 6. The busbar 6 may transmit electrical energy. The busbar 6 may electrically connect the battery modules 4 and the central regulation unit 7 to each other. The battery module assembly 1 may include a plurality of busbars 6. The busbars 6 may extend in the second direction. The busbars 6 may electrically connect the battery modules 4 to each other. The busbars 6 may connect the battery modules 4 in series or in parallel to each other. The busbars 6 may be connected to end portions of the battery modules 4. The busbars 6 may be connected to busbar accommodation portions of the battery modules 4. The busbars 6 may be fixed to the frame 2. The busbars 6 may be quick-connect busbars. However, the function and role of the busbars 6 are not limited thereto.

Referring to FIGS. 1, 3, and 7, according to an embodiment, the battery module assembly 1 may be configured such that the battery modules 4 may be coupled to or separated from the lower side of the frame 2. The battery modules 4 may be attached to or detached from the battery module assembly 1 as desired. The battery module assembly 1 may be configured such that the battery modules 4 may be individually separated from the frame 2 without having to entirely detach the battery pack. The battery module assembly 1 may be configured such that each of the battery modules 4 may be easily attached and detached. The battery module assembly 1 may provide a space-efficient power supply system by fixing the battery modules 4 to the frame 2 by using the fixing members 43. The battery module assembly 1 may provide a power supply system from which the battery modules 4 are easily separable as desired and may be easily maintained and repaired. However, methods of separating and installing the battery modules 4 are not limited to the description above.

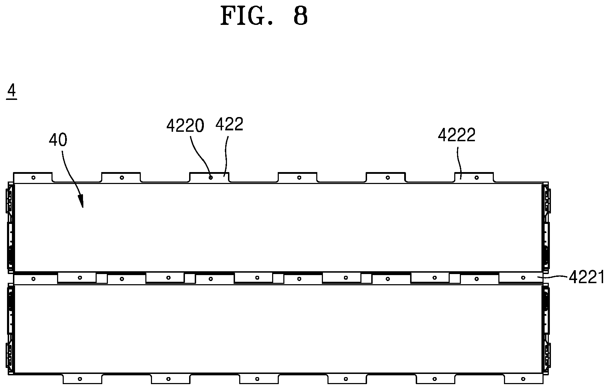

FIG. 8 is a plan view of battery modules 4 arranged side-by-side according to an embodiment.

Referring to FIGS. 3 and 8, according to an embodiment, the fastening flanges 422 of adjacent battery modules 4 may not overlap each other. The fastening flanges 422 may be asymmetrically formed on the battery modules 4. The fastening flanges 422 may be asymmetrically formed on both sides of each of the battery modules 4. For example, the fastening flanges 422 on one of the battery modules 4 may be offset with the fastening flanges 422 on an adjacent one of the battery modules 4 such that they do not overlap or only partially overlap.

According to an embodiment, the fastening flanges 422 may include first fastening flanges 4221 and second fastening flanges 4222. The first fastening flanges 4221 may be arranged at intervals (e.g., regular or predetermined intervals) on a side of each of the battery modules 4 in the length direction. The second fastening flanges 4222 may be arranged at intervals (e.g., regular or predetermined intervals) on the other side of each of the battery modules 4 in the length direction. The first fastening flanges 4221 and the second fastening flanges 4222 may be staggered in (e.g., offset in) the length direction of the battery modules 4. The first fastening flanges 4221 and the second fastening flanges 4222 may be asymmetrical with respect to the battery modules 4. The first fastening flanges 4221 and the second fastening flanges 4222 may be point symmetrical with respect to center points of the battery modules 4 in a plan view. However, the arrangement of the first fastening flanges 4221 and the second fastening flanges 4222 is not limited thereto.

If the fastening flanges 422 are asymmetrically formed on both sides of each of the battery modules 4, a space for preventing the fastening flanges 422 from overlapping each other may be provided. If the fastening flanges 422 are asymmetrically formed on both sides of each of the battery modules 4, the distance between adjacent battery modules 4 may be reduced. If the fastening flanges 422 are asymmetrically formed on both sides of each of the battery modules 4, the battery module assembly 1 may have a high degree of space efficiency. For example, if the fastening flanges 422 are asymmetrically formed on both sides of each of the battery modules 4, the distance between adjacent battery modules 4 may be relatively small. For example, if the fastening flanges 422 are asymmetrically formed on both sides of each of the battery modules 4, the distance between adjacent battery modules 4 may be greater than a protruding length of the fastening flanges 422 but less than twice the protruding length of the fastening flanges 422. For example, if the fastening flanges 422 are asymmetrically formed on both sides of each of the battery modules 4, the distance between adjacent battery modules 4 may be greater than the protruding length of the fastening flanges 422 but less than about 1.5 times the protruding length the fastening flanges 422. For example, if the fastening flanges 422 are asymmetrically formed on both sides of each of the battery modules 4, the width of the support fixing portions 20 may be greater than the protruding length of the fastening flanges 422 but less than twice the protruding length of the fastening flanges 422. For example, if the fastening flanges 422 are asymmetrically formed on both sides of each of the battery modules 4, the width of the support fixing portions 20 may be greater than the protruding length of the fastening flanges 422 but less than about 1.5 times the protruding length of the fastening flanges 422. However, the relationship between the protruding length of the fastening flanges 422, the width of the support fixing portions 20, and the distance between adjacent battery modules 4 is not limited thereto. The arrangement of the fastening flanges 422 is not limited to the description above. The fastening flanges 422 providing space efficiency of the battery module assembly 1 may be provided in an embodiment of the present disclosure. In another embodiment, the fastening flanges 422 formed on both sides of each of the battery modules 4 may be symmetrical in a plan view and may have different heights.

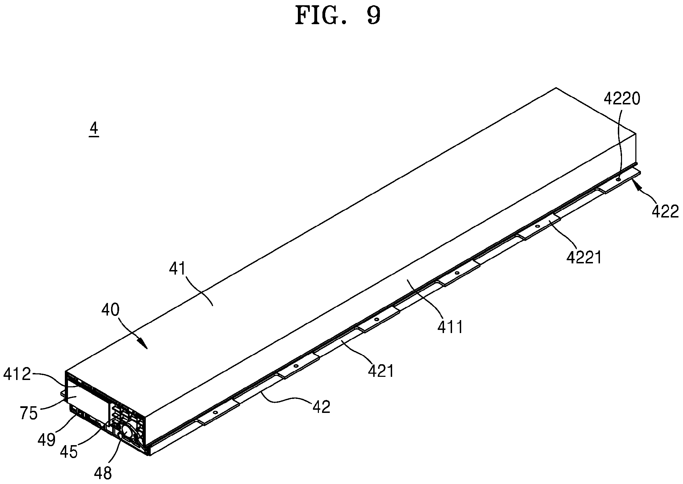

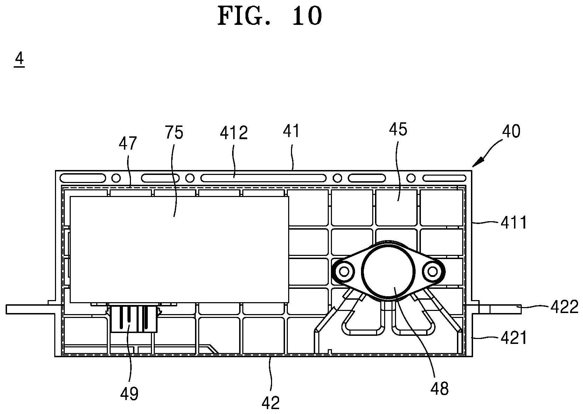

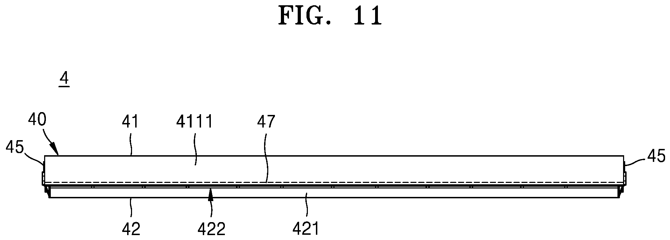

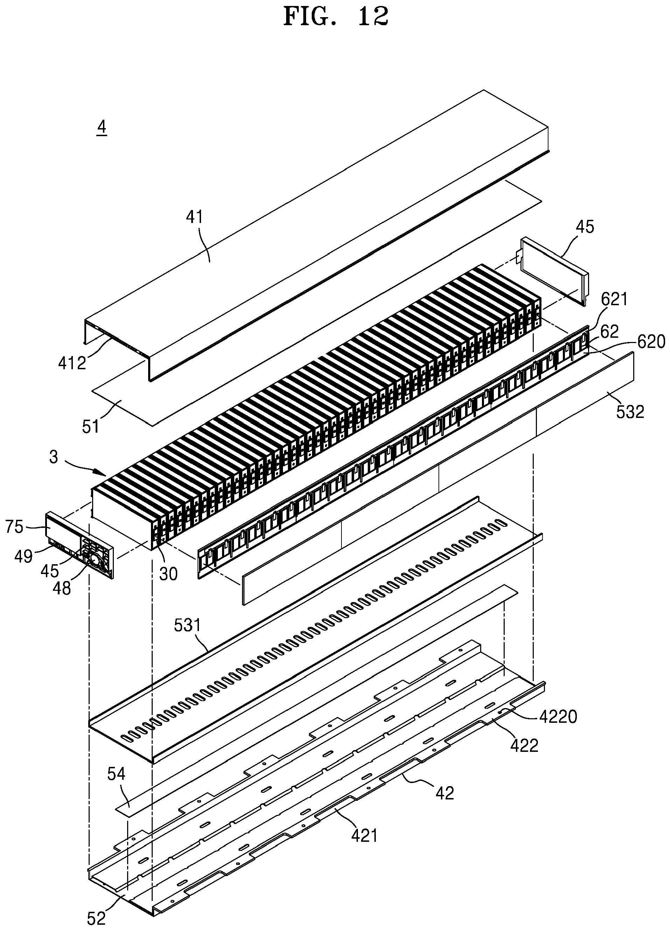

FIG. 9 is a perspective view of a battery module 4 according to an embodiment. FIG. 10 is a front view of the battery module 4 according to an embodiment. FIG. 11 is a side view of the battery module 4 according to an embodiment. FIG. 12 is an exploded perspective view of the battery module 4 according to an embodiment.

Referring to FIGS. 1, 3, and 8 to 12, according to an embodiment, the battery module 4 may include a housing 40 forming the exterior of the battery module 4 and protecting the battery module 4. The housing 40 may include an upper housing 41, a lower housing 42, and a terminal housing 45. The housing 40 may include a plurality of terminal housings 45. The terminal housings 45 may include a housing configured to protect a front surface of the battery module 4 and a housing configured to protect a rear surface of the battery module 4. However, the housing 40 of the battery module 4 is not limited to the type described above.

According to an embodiment, the upper housing 41 may cover an upper side and portions of side surfaces of the battery module 4. The upper housing 41 may extend in the first direction. The upper housing 41 may be disposed toward the frame 2. The upper housing 41 may have first sides 411. The first sides 411 may cover portions of the side surfaces of the battery module 4. The first sides 411 may extend downwardly from both the sides of the upper housing 41 in the second direction.

According to an embodiment, the lower housing 42 may cover a lower side and portions of the side surfaces of the battery module 4. The lower housing 42 may extend in the first direction. The lower housing 42 may be disposed opposite the upper housing 41. The lower housing 42 may have second sides 421. The second sides 421 may cover portions of the side surfaces of the battery module 4. The second sides 421 may extend upwardly from both of the sides of the lower housing 42 in the second direction.

According to an embodiment, the first sides 411 may extend, from both of the sides of the upper housing 41 in the second direction, toward the lower housing 42 in the opposite direction to the vertical direction. According to an embodiment, the second sides 421 may extend, from both of the sides of the lower housing 42 in the second direction, toward the upper housing 41 in the vertical direction. The first sides 411 and the second sides 421 may be in contact with each other.

According to an embodiment, the terminal housings 45 may protect the front and rear surfaces of the battery module 4. The terminal housings 45 may connect the upper housing 41 and the lower housing 42 to each other at both of the sides (e.g., at opposite end portions) of the housing 40 in the first direction. The terminal housings 45 may include a module control unit 75, a second vent 48, and an external electrode 49. The module control unit 75 may include a communication unit configured to communicate with the central regulation unit 7. The module control unit 75 may include a control circuit configured to control battery cells 3 provided (or arranged) inside the battery module 4. The module control unit 75 may be a battery management module (BMM). The second vent 48 may be configured to discharge internal gas of the battery module 4 to the outside. The external electrode 49 may be a busbar accommodation portion to which a busbar 6 is fixed. However, the function and role of the terminal housings 45 are not limited to the description above.

According to an embodiment, the housing 40 may be assembled by welding. Portions at which the upper housing 41, the lower housing 42, and the terminal housings 45 are in contact with each other may be welded together. A weld line 47 may be formed on an edge at which at least one of the upper housing 41, the lower housing 42, and the terminal housings 45 are in contact with another of the upper housing 41, the lower housing 42, and the terminal housings 45. Owing to the configuration of the first sides 411 of the upper housing 41 and the second sides 421 of the lower housing 42, the number of welds for assembling the housing 40 may be reduced. However, methods of assembling the housing 40 are not limited thereto.

According to an embodiment, the first sides 411 may be longer than the second sides 421 in the vertical direction. If the first sides 411 are longer than the second sides 421 in the vertical direction, a level at which the first sides 411 and the second sides 421 are in contact with each other in the battery module 4 may be closer to the lower side of the battery module 4 than to the upper side of the battery module 4. According to an embodiment, the fastening flanges may be formed on the second sides 421. If the fastening flanges 422 are formed on the second sides 421, the fastening flanges 422 may be closer to a lower end of the battery module 4 than to an upper end of the battery module 4. The fastening flanges 422 may protrude at positions closer to the lower end of the battery module 4 than to the upper end of the battery module 4. If the fastening flanges 422 protrude at positions closer to the lower end of the battery module 4 than to the upper end of the battery module 4, the battery module 4 may be stably fixed to the inside of the frame 2. However, shapes and structures of the first sides 411, the second sides 421, and the fastening flanges 422 are not limited thereto.

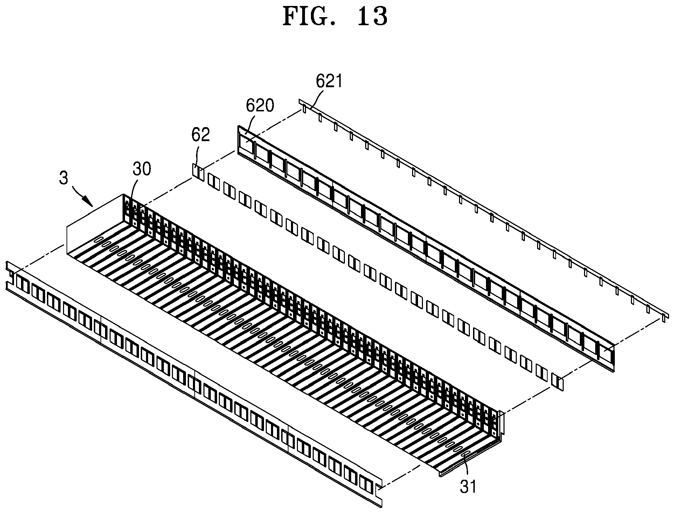

FIG. 13 is an exploded perspective view of the battery module 4 according to an embodiment in a state in which the housing 40 is removed from the battery module 4.

Referring to FIGS. 12 and 13, according to an embodiment, the battery module 4 may include a plurality of battery cells 3. Each of the battery cells 3 may store electrical energy. Each of the battery cells 3 may include an electrode 30. Busbars 62 may be connected to the electrodes 30. The electrodes 30 of adjacent battery cells 3 may be electrically connected to each other. The battery cells 3 may be electrically connected to each other in series or in parallel. The busbars 62 may connect the electrodes 30 of adjacent battery cells 3 to each other. A busbar fixing portion 620 may support the busbars 62. Each of the busbars 62 connecting the electrodes 30 of the battery cells 3 to each other may be connected to a control connection unit 621. The control connection unit 621 may be connected to the module control unit 75. The control connection unit 621 may sense (or may detect) information on each of the battery cells 3 and may transmit the information to the module control unit 75. The control connection unit 621 may include a flexible circuit board. However, methods of electrically connecting the battery cells 3 to each other are not limited to the description above.

According to an embodiment, the battery cells 3 may include first vents 31. The first vents 31 may discharge gas from the inside the battery cells 3 to the outside of the battery cells 3. The first vents 31 may be normally closed. The first vents 31 may open (e.g., may burst) if gas is generated due to an abnormal reaction (or event) inside the battery cells 3. The first vents 31 may be provided at the lower side of the battery module 4. However, the function and arrangement of the first vents 31 are not limited thereto.

According to an embodiment, the battery module 4 may include a first electrical insulation sheet 531 and second electrical insulation sheets 532. The first electrical insulation sheet 531 may be disposed under the battery cells 3 inside the battery module 4. The first electrical insulation sheet 531 may provide electrical insulation between the lower housing 42 and the battery cells 3. The second electrical insulation sheets 532 may be disposed on both sides of the battery cells 3 inside the battery module 4. The second electrical insulation sheets 532 may provide electrical insulation between the battery cells 3 and the upper housing 41 and/or the lower housing 42. The second electrical insulation sheets 532 may provide electrical insulation between the battery cells 3 and the first sides 411 and/or the second sides 421. However, the function and arrangement of the first electrical insulation sheet 531 and the second electrical insulation sheets 532 are not limited to the description above.

According to an embodiment, the battery module 4 may include a thermal insulation sheet 54. The thermal insulation sheet 54 may provide thermal insulation to the first electrical insulation sheet 531 such that gas discharged to the outside of a battery cell 3 through the first vent 31 off the battery cell 3 may not affect battery cells 3 adjacent to the battery cell 3. The thermal insulation sheet 54 may provide thermal insulation to the first vents 31 of the battery cells 3 such that gas discharged to the outside of a battery cell 3 through the first vent 31 of the battery cell 3 may not affect the first vents 31 of battery cells 3 adjacent to the battery cell 3. However, the function and arrangement of the thermal insulation sheet 54 are not limited thereto.

According to an embodiment, the battery module 4 may include a gas flow path 52. Gas discharged through the first vents 31 may flow through the gas flow path 52. The gas flow path 52 may guide the gas. The gas flow path 52 may be connected to the second vent 48 provided in the terminal housings 45. Gas discharged to the outside of the battery cells 3 through the first vents 31 may flow along the gas flow path 52 toward the second vent 48. However, methods of discharging gas from the inside of the battery module 4 are not limited thereto.

Referring to FIGS. 9, 10, and 12, according to an embodiment, the battery module 4 may include a heat transfer sheet 51. The heat transfer sheet 51 may transfer thermal energy generated by the battery cells 3. The heat transfer sheet 51 may extend in the first direction. The heat transfer sheet 51 may be disposed at upper sides of the battery cells 3 within the battery module 4. The heat transfer sheet 51 may transfer thermal energy generated by the battery cells 3 to the upper housing 41. The upper housing 41 may absorb thermal energy generated by the battery cells 3 and, thus, may maintain the temperature of the battery cells 3 at an appropriate level. However, methods of controlling the temperature of the battery cells 3 are not limited thereto.

According to an embodiment, the upper housing 41 may include a cooling path 412 therein. A cooling liquid or fluid may flow through the cooling path 412. The cooling path 412 may cool the battery module 4. The cooling path 412 may cool the upper housing 41. The cooling path 412 may extend in the length direction of the battery module 4. The cooling path 412 may extend in the first direction. The temperature of the battery cells 3 may be adjusted through the cooling path 412. However, the arrangement of the cooling path 412 is not limited to the description above.

As described above, according to one or more of the above-described embodiments, the battery modules 4 may be easily attached to the battery module assembly 1 or replaced with other battery modules 4 by using the fastening flanges 422 configured to be easily fixed to the support fixing portions 20 of the frame 2.

It should be understood that the embodiments described herein should be considered in a descriptive sense and not for purposes of limitation. Descriptions of features or aspects within each embodiment should typically be considered as available for other similar features or aspects in other embodiments. While embodiments of the present disclosure have been described with reference to the figures, it will be understood by those of ordinary skill in the art that various changes in form and details may be made therein without departing from the scope of the present disclosure as defined by the following claims and their equivalents.

## Claims

1. A battery module assembly comprising:
a frame;
a plurality of battery modules accommodated in a lower portion of the frame, each of the plurality of battery modules comprising a battery cell; and
a protective cover extending across and protecting lower portions of the plurality of battery modules,
wherein the frame comprises a plurality of support fixing portions extending in a length direction in which each of the plurality of battery modules extends and being configured to support both sides of each of the plurality of battery modules,
wherein the plurality of battery modules further comprise fastening flanges protruding in directions from the sides of the battery modules adjacent to the plurality of support fixing portions and overlapping the plurality of support fixing portions in a vertical direction, and
wherein the plurality of battery modules are fixed to the lower portion of the frame by using fixing members that extend through the fastening flanges from lower sides of the fastening flanges and are accommodated in the plurality of support fixing portions.

2. The battery module assembly as claimed in claim 1, wherein the plurality of battery modules are arranged in a second direction crossing a first direction in which front and rear sides of the frame face each other.

3. The battery module assembly as claimed in claim 2, wherein the length direction in which each of the plurality of battery modules extends is the first direction.

4. The battery module assembly as claimed in claim 3, wherein the fastening flanges are provided on both sides of each of the plurality of battery modules in the second direction such that a plurality of fastening flanges are arranged at intervals in the first direction along each of both sides of the plurality of battery modules.

5. The battery module assembly as claimed in claim 4, wherein the fastening flanges are asymmetrically provided on both sides of each of the plurality of battery modules such that the fastening flanges do not overlap each other at battery modules adjacent to each other in the second direction.

6. The battery module assembly as claimed in claim 5, wherein the fastening flanges protrude at positions that are closer to lower ends of each of the plurality of battery modules than to upper ends of each of the plurality of battery modules.

7. The battery module assembly as claimed in any one of claims 3 to 6, further comprising a busbar fixed to the frame,
wherein the plurality of battery modules adjacent to each other in the second direction are electrically connected to each other through the busbar.

8. The battery module assembly as claimed in claim 7, wherein the busbar extends in the second direction, and
wherein the plurality of battery modules adjacent to each other in the second direction are electrically connected to each other through the busbar.

9. The battery module assembly as claimed in any one of claims 3 to 8, wherein each of the plurality of battery modules further comprises an upper housing extending in the first direction and disposed toward the frame and a lower housing extending in the first direction and opposite the upper housing,
wherein the upper housing has first sides extending, from both end portions of the upper housing in the second direction, toward the lower housing in the vertical direction, and
wherein the lower housing has second sides extending, from both end portions of the lower housing in the second direction, toward the upper housing in a direction opposite the vertical direction.

10. The battery module assembly as claimed in claim 9, wherein the first sides are longer than the second sides in the vertical direction.

11. The battery module assembly as claimed in claim 9 or claim 10, wherein each of the plurality of battery modules further comprises terminal housings that connect the upper housing and the lower housing to each other at both end portions of the respective battery module in the first direction, and
wherein at least one of the upper housing, the lower housing, and the terminal housings comprises a weld line formed on an edge that is in contact with another of the upper housing, the lower housing, and the terminal housings.

12. The battery module assembly claimed in claim 11, wherein the battery cell comprises a first vent in a lower portion thereof and configured to discharge gas, and
wherein each of the plurality of battery modules further comprises a gas flow path in an inner lower side thereof to guide the gas.

13. The battery module assembly as claimed in claim 12, wherein each of the plurality of battery modules further comprises a second vent in the terminal housings and connected to the gas flow path to discharge the gas to an outside area.

14. The battery module assembly as claimed in any one of claims 9 to 13, wherein each of the plurality of battery modules further comprises a heat transfer sheet between the battery cell and the upper housing and extending in the first direction.

15. The battery module assembly as claimed in claim 14, wherein the upper housing comprises a cooling path therein, the cooling path extending in the first direction and configured to cool the respective battery module.
